# EUROPEAN PATENT SPECIFICATION

(11) **EP 3 873 219 B1**
(45) Date of publication and mention of the grant of the patent: **13.08.2025**
(21) Application number: 19795017.3
(22) Date of filing: 31.10.2019
(51) Int. Cl.: A23C 20/02

(54) **NON-DAIRY CHEESE ANALOGUE AND PROCESS FOR PREPARATION THEREOF**
MILCHFREIES KÄSEANALOG UND VERFAHREN ZUR HERSTELLUNG DAVON
ANALOGUE DE FROMAGE NON LAITIER ET SON PROCÉDÉ DE PRÉPARATION

(30) Priority: 01.11.2018 EP 18203968
(43) Date of publication of application: 08.09.2021
(73) Proprietor: Société des Produits Nestlé S.A., 1800 Vevey (CH)
(72) Inventor: RAY, Joydeep, 1066 Epalinges (CH); FERNANDEZ,FARRES, Isabel, 1012 Lausanne (CH)
(74) Representative: Slaven, John William
(86) International application number: PCT/EP2019/079807
(87) International publication number: WO 2020/089383

(56) References cited:
- US-A- 5 807 601
- US-A1- 2010 196 575
- US-A1- 2013 287 928
- SOLOWIEJ BARTOSZ ET AL: "The effect of pH and modified maize starches on texture, rheological properties and meltability of acid casein processed cheese analogues", EUROPEAN FOOD RESEARCH AND TECHNOLOGY, SPRINGER BERLIN HEIDELBERG, BERLIN/HEIDELBERG, vol. 242, no. 9, 23 February 2016 (2016-02-23), pages 1577 - 1585, XP036020238, ISSN: 1438-2377, [retrieved on 20160223], DOI: 10.1007/S00217-016-2658-4

## Description

### Background of the invention

There has been an increasing trend in the supply of dairy-free products. The single largest factor driving consumers to choose dairy-free is a shift in perception of millennials who believe dairy-free is better for them. Their perceptions of health and sustainability (including animal welfare and environmental footprint) are core motivators for their choice to limit dairy consumption. Such a shift in choosing dairy-free has extended from milk to products such a cheese. Currently, all commercially available vegan cheeses are based on flours, starches or nuts combined with a range of additives (thickeners, gelling agents, stabilizers and emulsifiers). Choice of such additives (especially chemically modified) as ingredients is not well perceived by the consumer of today as "a natural food product". The use of starch or starch derivatives (e.g. flours, legumes, starches) result in detrimental effects on texture, leading to products with a grainy sensory perception when consumed, lack of creaminess and desired stretch ability on baking (e.g. in pizza toppings). In addition, starches and flours with high glycemic index are not desired or recommended for specific consumer populations (e.g. diabetics or those wishing to limit carbohydrate content in their daily food intake). Cheese like products based on nuts, even if combined with gelling agents, do not exhibit a texture/rheological response that matches that of cheese, specifically springiness or stretch ability on baking. Some commercial cheese analogue products currently in the market are based on soy and typically containing casein, a dairy protein and hence not suitable for vegan consumers. In addition, soy contains some allergens (such as lectins) and therefore not adequate for those consumers sensitive to those molecules. Due to all those deficiencies, there is nowadays no plant-based cheese analogue that is acceptable for consumers in terms of optimal textural attributes and friendly, natural ingredient list.

US 5,807,601 discloses a cheese analogue comprising hydrocolloids as stabilizers. US 20080000105 discloses a method for producing non-dairy cottage cheese using 1 wt. % of hydrocolloids (k-carrageenan, guar gum). US 20100196575 describes substitute cheese based on vegetable protein, vegetable oil and a hydrocolloid. US 20170020156 discloses a cheese analogue, which comprise a powder blend comprising at least one vegetable protein, at least one flour and at least one hydrocolloid. US 20130295265 discloses a cheese extender comprising starch, whey, emulsifiers and 0-8 wt. % gums (xanthan, locus bean gum, guar gum).

In addition to the prior art above, there are also vegan cheeses in the market which are not considered not natural due to the presence of additives such as modified starches and/or hydrocolloids. If a composition devoid of these additives were to be produced, the said composition does not yield cheese like properties.

In the light of the above, there is a clear need for a non-dairy, plant-based cheese analogue with desirable textural properties and short and consumer friendly label.

### Summary of invention

The invention relates to natural non-dairy cheese analogue compositions which are plant based, and devoid of additives. The composition may be for example be a natural cheese product with improved textural attributes. Such a composition would serve as an alternative to dairy products for human consumption.

The present invention relates to a non-dairy cheese analogue composition comprising dietary fiber; plant protein, lipid and calcium, wherein the composition is devoid of additives, wherein additives comprises modified starches, hydrocolloids, emulsifiers, whitening agents, plasticizers and anti-caking agents, and wherein the dietary fiber is potato fiber ranging from 0.5 to 15 wt. %.

In one embodiment the present invention relates to a non-dairy cheese analogue composition comprising 0.5 to 15 wt. % dietary fiber, 2 to 15 wt. % plant protein and 5 to 30 wt. % lipid; wherein additives comprises modified starches, hydrocolloids, emulsifiers, whitening agents, plasticizers and anti-caking agents.

Another aspect of the present invention relates to a method of preparing the cheese analogue composition comprising the steps of:
i) Mixing dietary fiber, calcium and plant protein at room temperature;(ii) Adding water under shear until homogenous mixture is reached;
(iii) Adding lipids to the above mixture and emulsifiing under high shear;
(iv) Adjusting the pH between 4-6 of the emulsion obtained in step (iii) followed by heating the emulsion to a temperature ranging from 70 °C to 90°C, until desired smooth, homogeneous texture is achieved.
(v) Optionally molding the emulsion obtained in step (iv) to required shape; and
(vi) Cooling down resulting in a gel form.

In one embodiment the composition after cooling step undergoes a water evaporation step performed under vacuum.

### Brief description of figures

Figure 1A represents apparent viscosity (Pa.s) of potato fiber water dispersions as a function of shear rate (s⁻¹) at a range concentrations.
Figure 1B represents strain sweeps for 5 wt. % potato fiber water dispersions, measured at constant Frequency of 1 Hz.
Figure 2A-F shows production process of non-dairy cheese analogue described in this invention.
Figure 3 shows textural hardness of different non-dairy cheese analogue compositions determined by textural analysis method as described in example 3.

### Detailed description of the invention

The term "wt. %" used in the entire description below refers to total weight % of the final product. The final composition included water unless specified. The recipes in the examples show an illustration of how wt. % is to be understood by the skilled person in the art.

The term "non-dairy cheese analogue" refer to replacements of cheese and are non-dairy based food compositions. The term includes vegan cheeses intended to be used for salad bars and baked cheese food products such as pizzas and pasta.

The term "devoid of additives" refers to compositions not containing modified starches, hydrocolloids (e.g. carraregenans, xanthan gum, gellan gum, locust bean gum, alginates, guar gum, karaya gum, gum Arabic, konjac gum, agar agar, gelatin); emulsifiers (e.g. lecithin, mono and diglycerides, Polyglycerol polyricinoleate (PGPR)); whitening agents (e.g. titanium dioxide); plasticizers (e.g. glycerine); anti-caking agents (e.g. silicon-dioxide).

The term "dietary fiber" relates to a plant-based ingredient that is not completely digestible by enzymes in the human gut system. The term may comprise plant based fiber-rich fraction obtained from vegetables, seeds, fruits, nuts, pulses. The dietary fiber may comprise cellulose, hemicellulose, pectin, β-glucans, gums, mucilages and lignin. In one embodiment the dietary fiber is a fiber fraction from potato with a soluble polysaccharide fraction greater than 50% and comprising pectins as main polysaccharide component of the soluble fraction and may contain residual starch and protein. In one embodiment of the present invention, the dietary fiber comprises 60 wt. % soluble polysaccharide fraction and 40 wt. % insoluble polysaccharide. Furthermore, the soluble fraction comprises at least 50 wt. % of pectin in its natural form. In one embodiment the plant-source is a potato flesh and skin fragments. In one embodiment of the present invention, the dietary fiber comprises a soluble polysaccharide fraction greater than 50 wt. %, wherein soluble polysaccharide fraction comprises at least 50 wt. % pectin.

A water based solution comprising 5 wt. % dietary fiber at 20°C exhibits the following viscoelastic properties:
- shear thinning behavior with zero shear rate viscosity above 8 Pa.s and
- G' (storage modulus) greater than 65 Pa and G" (loss modulus) lower than 25Pa of at 1Hz frequency.

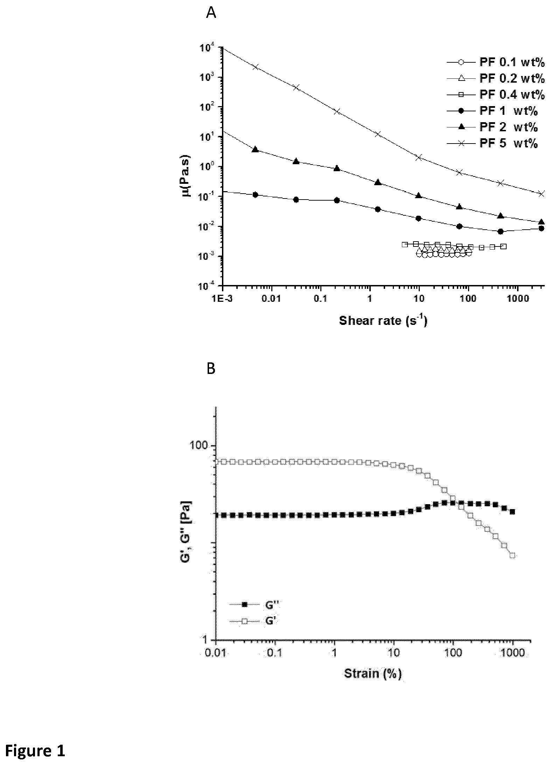

Within the scope of this invention, the shear thinning is defined as any material that exhibits a decrease in viscosity with increasing shear rate or applied stress (see figure 1).

In one embodiment of the present invention the amount of dietary fiber used in preparing non-dairy cheese analogue composition ranges from 0.5 to 15 wt. %. The dietary fiber could at least 50 wt. % soluble fiber content of the total fiber content.

The term "plant protein" includes "plant protein isolates" or "plant protein concentrates" or combination thereof and refers to any protein source from vegetables, seeds, nuts, algae, pulses.

The term "plant protein concentrate" as used herein is a plant material having a protein content of from about 65 wt. % to less than about 90 wt. % plant protein. Plant protein concentrate also contains plant fiber, typically from about 3.5 wt. % up to about 20 wt. %.

The term plant protein isolate as used herein is a plant material having a protein content of at least about 80 wt. % plant protein on a moisture free basis.

Plant protein include plant protein concentrate or plant protein isolate from pea protein, corn protein (e.g., ground corn or corn gluten), wheat protein (e.g., ground wheat or wheat gluten such as vital wheat gluten), potato protein, legume protein such as soy protein (e.g., soybean meal, soy concentrate, or soy isolate), rice protein (e.g., ground rice or rice gluten), barley protein, algae protein, canola protein or combinations thereof. Preferably the plant protein is wheat gluten, more preferably the plant protein is a mix from soy protein and wheat gluten, more preferably the plant protein is soy protein.

In one embodiment the plant protein is a pea protein isolate with protein fraction of at least 50 wt. %. In one embodiment the plant protein is a pea protein isolate with protein fraction of at least 80 wt. %.

In one embodiment of the present invention the amount of pea protein isolate used in preparing non-dairy cheese analogue composition ranges from 2 to 15 wt. %.

The term "lipid" refers to oil, fat and combinations of oil and fat in particular triglycerides. The term "lipid" also comprises oils obtained from vegetables, seeds, nuts and algae. In a preferred embodiment the oil is selected from the group consisting of sunflower oil, rapeseed oil, canola oil, cotton seed oil, peanut oil, soy oil, olive oil, moringa oil, algal oil, safflower oil, corn oil, rice bran oil, sesame oil, hazelnut oil, avocado oil, almond oil, walnut oil or a combination thereof including the high oleic versions of the oils stated above. In one embodiment the lipid is a high oleic vegetable oil comprising monounsaturated fatty acid of at least 65 wt. % and polyunsaturated fatty acid below 10 wt. % and displays below 5 wt. % of solid fat content at 0°C, wherein, the unsaturated fatty acid contains 18C-atoms or more than 18C-atoms. The term lipid may also refer to solid fats with saturated fatty acid content greater than 20 wt. %, for example stearin fractions and mid-fractions of palm (both fruit and Kernel), shea, cocoa, coconut, cottonseed, moringa and algae. In one embodiment the solid fat may be stearin fraction of Shea butter.

In one embodiment of the present invention the amount of lipid used in preparing non-dairy cheese analogue composition ranges from 5 to 30 wt. %.

The term "calcium" refers to salts of calcium such as calcium carbonate, calcium chloride, calcium gluconate, calcium lactate, calcium phosphate, calcium glycerophosphate and the like, and mixtures thereof. In one embodiment the calcium is a calcium phosphate salt. The amount of calcium ranges from 0.5 to 5 wt. %.

The term "citrus fruit juice concentrate" comprises lemon juice, grape fruit, orange, berries, lime and combinations thereof. The term also includes clarified form. In an embodiment the "citrus fruit juice concentrate" is concentrated juice from citrus fruits selected from the group consisting of lemon, grape fruit, orange, lime and combinations of these. In one embodiment the citrus fruit juice concentrate is lime juice ranging from 0 to 5 wt. %.

In one embodiment the present invention relates to use of non-dairy cheese composition comprising 0.5 to 15 wt. % dietary fiber, 2 to 15 wt. % plant protein and 5 to 30 wt. % lipid; wherein additives comprises modified starches, hydrocolloids, emulsifiers, whitening agents, plasticizers and anti-caking agents to prepare culinary recipes comprising desserts, cheese, savory filings. In another embodiment the composition as described here comprises dietary fiber having at least 50 wt. % of soluble polysaccharide fraction of the total dietary fiber. In another embodiment this soluble fraction is pectin.

In one embodiment the natural vegan cheese comprises a matrix of vegetable fiber, plant-based protein and lipid. For example a vegan cheese recipe may comprise a mixture of 0.5 to 15 wt. % potato fiber, 2 to 15 wt. % pea protein and 5 to 30 wt. % sunflower oil. The product characteristics such as hardness, chewiness and melting profile were analyzed leading to creation of specific target textures (such as soft cheese, mozzarella and parmesan like chesses). The texture of the product is improved over existing solutions, including significant stretching upon baking (e.g. as pizza topping).

In one embodiment the present invention relates to a method of preparing the cheese analogue composition comprising the steps of (i) Mixing dietary fiber and plant protein at room temperature in amount such that further incorporation of lipid in following step (iil) should be possible; (ii) Adding water under shear until homogenous mixture is reached; (iii) Adding lipids to the above mixture and emulsifying under high shear; (iv) Adjusting the pH between 4-6 of the emulsion obtained in step (iii) followed by heating the emulsion to a temperature ranging from 70 °C to 90°C, until desired smooth, homogeneous texture is achieved. (v) Optionally molding the emulsion obtained in step (iv) to required shape; and (vi) Cooling down resulting in a gel form.

In one embodiment the present invention relates to a method of preparing the non-dairy based cheese analogue composition comprising the initial step of mixing potato fiber and pea protein in presence of water such that the total wt. % of potato fiber and pea proteins ranges from 12 to 16 wt. % Lack of water makes the product very pasty and incorporation of oil is impossible. Similarly excess of water renders the composition not suitable for cheese formation. A further emulsifying step involves incorporation of a mixture of HOSO and Shea Stearin. The oils to solids ratio is critical in order to obtain a homogenous mixture, for instance a high ratio prevents oils to be incorporated in the matrix. In one embodiment the mixture of HOSO and Shea Stearin are in range of 10 and 30 wt. % for obtaining a low total solid (TS) recipe of 12 wt. % (TS - refers to total potato fiber and pea protein content only). In another embodiment the mixture of HOSO and Shea Stearin are in range of 10 and 25 wt. % for obtaining a low total solid (TS) recipe of 16 wt. %.

### Examples

### Example 1: Non-dairy cheese analogue composition

Non-dairy cheese recipes A to F (expressed in wt. %) were prepared with varied composition at lab scale as outlined in Table 1. Total solid values shown in the table includes fiber, protein, lipids (High oleic sunflower oil -HOSO and Shea stearin fraction), calcium and table salt.

**Table 1.**

| Ingredients | Recipe A | Recipe B | Recipe C | Recipe D | Recipe E | Recipe F |
|---|---|---|---|---|---|---|
| Potato Fiber | 0.5 | 4 | 5.4 | 5.6 | 8.9 | 5.6 |
| Pea Protein Isolate | 11.5 | 12 | 10.6 | 10.4 | 7.1 | 6.4 |
| HOSO | 17 | 16.7 | 6.7 | 10 | 15 | 15 |
| Shea stearin fraction | 0 | 3.3 | 3.3 | 5 | 0 | 15 |
| Calcium phosphate | 2 | 2 | 2 | 2 | 2 | 2 |
| Table salt | 0.5 | 0.5 | 0.5 | 0.5 | 0.5 | 0.5 |
| Lime juice | 3 | 3 | 3 | 3 | 3 | 3 |
| Water | 65.5 | 58.5 | 68.5 | 63.5 | 63.5 | 52.5 |
| Total solids | 31.5 | 38.5 | 28.5 | 33.5 | 33.5 | 44.5 |
| SFA (%) | 1.4 | 3.4 | 2.6 | 3.9 | 1.2 | 10.5 |

### Example 2: Production process of non-dairy cheese

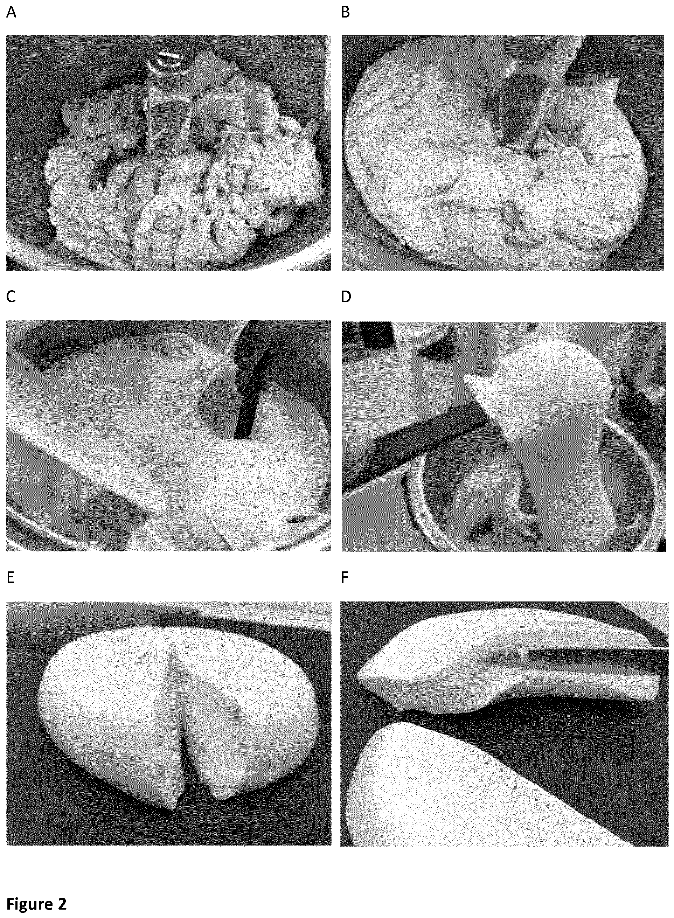

A lab scale double-jacketed Stephan mixer equipped with a cutting blade was used to produce different non-dairy cheeses as outlined in Table 1. Figure 2A-F displays the different steps of the production process, which includes weighting and dry mixing of the powder ingredients. Addition of water and mixing under high shear (sample T=20°C/t=5-10 min) in Stephan mixer (Figure 2A).

Next, lipids were added (i.e. HOSO or shea stearin fraction and combination of thereof) under low shear, followed by lime juice addition under high shear mixing (sample T=20°C/t=10-15 min) to obtain a dietary fiber-protein gel network with stabilized lipid droplets obtain Figure 2B. The samples were then heated (sample T=85°C) while mixing under high shear until reaching target stretch ability, smooth texture (Figure 2C and D). Finally, the samples were molded (sample T > 70°C) and cooled until set (T=4-10°C, preferably overnight). Figure 2E and F displays molded and final set structure of non-dairy cheese (Recipe E).

### Example 2a: Comparative example

The same process as described above (example 2) was applied to produce a non-dairy cheese using dietary fiber from pea source with an increased insoluble fraction (70 wt. %) at the same concentration that the examples mentioned in this inventions as follows: 10 wt. % pea hull fiber, 5 wt. % pea protein, 20 wt. % lipid, 2 wt. % calcium phosphate and 1 wt. % lime juice. No cheese analogue could be obtained.

### Example 3: Texture Analyses of non-dairy cheese analogue compositions

A TA-HDi texture analyzer was used to measure the hardness characteristics of the non-dairy cheese analogue compositions outline in Table 1. Cheese samples were cut in a cylindrical shape of 3.5 cm diameter and hardness of the samples were measured via penetrometry at room temperature using a cylindrical probe of 0.5 cm diameter, speed of 1mm/sec and 10 mm penetration with a force threshold of 0.05N. 5 replicate measurements were performed and the force of penetration at 4 mm was recorded.

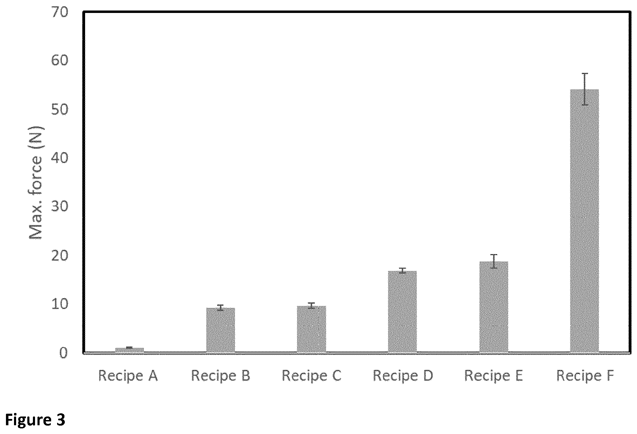

Figure 3 displays the maximum force required for penetration for different non-dairy cheese recipes. By varying the proportions of ingredients in the recipes A-F, different levels of texture was achieved which allows to formulate several variety of non-dairy cheese products for food applications.

### Example 4: Rheological properties of potato fiber

Potato fibers from commercially available sources were selected based on their rheological response when dispersed in water.

Figure 1.A. shows shear viscosity of potato fiber dispersions at a range of concentrations. A Newtonian fluid behavior is observed at concentrations low concentrations (below 1% wt.) whereas a shear thinning response becomes apparent at concentrations equal or above 1% wt. The onset concentration for shear thinning response for this potato fiber is rather low compared to fibers comprising large amounts of insoluble polysaccharides (e.g. cellulose, hemicellulose). This is mainly due to the increased amount of soluble, high molecular polysaccharide chains from the potato fiber (primarily galacturtonic and glucuronic type, but also glucans, mannoses, xyloses, rhamonoses and arabinoses) which are solubilized in the water continuous phase and hence occupy large hydrodynamic volumes.

The viscoelastic properties of 5% wt. potato fiber water dispersions are shown in Figure 1.B., with G' being significantly greater than G" and constant over wide range of applied strain (corresponding to the linear viscoelastic region) until the microstructure breaks down and the material yields. The fact that potato fiber dispersions show G' > G" indicates the dominant solid-like response over the applied strain ranges, which is attributed to the chain entanglement between the previously mentioned polysaccharides that are solubilized in the water-continuous phase. The insoluble fiber fraction of the potato fiber is acting as a filler, with less contribution to the viscoelastic response of the dietary fiber suspension

This particular viscoelastic response is not measured when dietary fibers with greater insoluble fraction (comprising primarily cellulose, hemicellulose, and lining) are used at the same concentration. Those dietary fibers behave as particulate dispersions in which insoluble fiber particles have the tendency to sediment thereby displaying lower viscosity values and without any elastic contribution at equal concentration ranges. For these insoluble fiber rich ingredients, increased concentrations are needed for the particulate dispersions to exhibit solid-like behavior. This occurs when the suspensions are densely packed, with an effective phase volume greater than their maximum packing fraction which leads to solid-like linear viscoelastic response that exhibits flows only if a sufficient shear stress is applied (i.e. the yield stress).

## Claims

1. A non-dairy cheese analogue composition comprising dietary fiber; plant protein, lipid and calcium, wherein the composition is devoid of additives, wherein additives comprises modified starches, hydrocolloids, emulsifiers, whitening agents, plasticizers and anti-caking agents, and wherein the dietary fiber is potato fiber ranging from 0.5 to 15 wt. %.

2. The composition of any one of the claim 1, wherein the plant protein is pea protein isolate ranging from 2 to 15 wt. %.

3. The composition of any one of the claims 1 to 2, wherein the lipid comprises high oleic sunflower oil and/or shea stearin ranging from 5 to 30 wt. %.

4. The composition of any one of the claims 1 to 3, wherein the calcium is calcium phosphate ranging from 0.5 to 5 wt. %.

5. The composition of any one of the claims 1 to 4, wherein the dietary fiber comprises a soluble polysaccharide fraction greater than 50 wt. % of the total dietary fiber.

6. The composition of claim 5, wherein the soluble polysaccharide fraction comprises at least 50 wt. % pectin.

7. Use of the composition of any one of the claims 1 to 6 to prepare culinary recipes comprising desserts, cheese, savory filings.

8. A method of preparing the cheese analogue composition comprising the steps of:
(i) Mixing dietary fiber, calcium and plant protein at room temperature;
(ii) Adding water under shear until homogenous mixture is reached;
(iii) Adding lipids to the above mixture and emulsifiing under high shear;
(iv) Adjusting the pH between 4-6 of the emulsion obtained in step (iii) followed by heating the emulsion to a temperature ranging from 70 °C to 90°C, until desired smooth, homogeneous texture is achieved.
(v) Optionally molding the emulsion obtained in step (iv) to required shape; and
(vi) Cooling down resulting in a gel form.

9. The method of claim 8, wherein the step (i) further comprises flavoring salt preferably table salt.

10. The method of claim 8 wherein the composition after cooling step undergoes a water evaporation step performed under vacuum.

## Patentansprüche

1. Milchfreie Käseanalogzusammensetzung, umfassend Ballaststoff; Pflanzenprotein, Lipid und Kalzium, wobei die Zusammensetzung frei von Zusatzstoffen ist, wobei die Zusatzstoffe modifizierte Stärken, Hydrokolloide, Emulgatoren, Weißmacher, Weichmacher und Antiklumpmittel umfassen, und wobei der Ballaststoff Kartoffelfaser in einem Bereich von 0,5 bis 15 Gew.-% ist.

2. Zusammensetzung nach Anspruch 1, wobei das Pflanzenprotein Erbsenproteinisolat in dem Bereich von 2 bis 15 Gew.-% ist.

3. Zusammensetzung nach einem der Ansprüche 1 bis 2, wobei das Lipid Sonnenblumenöl mit hohem Ölsäuregehalt und/oder Shea-Stearin in dem Bereich von 5 bis 30 Gew.-% umfasst.

4. Zusammensetzung nach einem der Ansprüche 1 bis 3, wobei das Kalzium Kalziumphosphat in dem Bereich von 0,5 bis 5 Gew.-% ist.

5. Zusammensetzung nach einem der Ansprüche 1 bis 4, wobei der Ballaststoff eine lösliche Polysaccharidfraktion von mehr als 50 Gew.-% des gesamten Ballaststoffs umfasst.

6. Zusammensetzung nach Anspruch 5, wobei die lösliche Polysaccharidfraktion mindestens zu 50 Gew.-% Pektin umfasst.

7. Verwendung der Zusammensetzung nach einem der Ansprüche 1 bis 6, um kulinarische Rezepte herzustellen, umfassend Desserts, Käse und herzhafte Füllungen.

8. Verfahren zum Herstellen einer Käseanalogzusammensetzung, umfassend die Schritte:
(i) Mischen von Ballaststoff, Kalzium und Pflanzenprotein bei Raumtemperatur;
(ii) Zugeben von Wasser unter Scherung, bis eine homogene Mischung erreicht ist;
(iii) Zugeben von Lipiden zu der obigen Mischung und Emulgieren unter hoher Scherung;
(iv) Einstellen des pH-Werts zwischen 4-6 der Emulsion, die in Schritt (iii) erhalten wird, gefolgt von Erhitzen der Emulsion auf eine Temperatur in dem Bereich von 70 °C bis 90 °C, bis eine gewünschte gleichmäßige, homogene Textur erreicht ist.
(v) Optionales Formen der Emulsion, die in Schritt (iv) erhalten wird, in die erforderliche Form; und
(vi) Abkühlen, wodurch eine Gelform entsteht.

9. Verfahren nach Anspruch 8, wobei der Schritt (i) ferner ein Würzen mit Salz, vorzugsweise Tafelsalz, umfasst.

10. Verfahren nach Anspruch 8, wobei die Zusammensetzung nach einem Abkühlschritt einem Wasserverdampfungsschritt unterzogen wird, der unter Vakuum durchgeführt wird.

## Revendications

1. Composition d'analogue de fromage non laitier comprenant une fibre alimentaire ; une protéine végétale, un lipide et du calcium, dans laquelle la composition est dépourvue d'additifs, dans laquelle les additifs comprennent des amidons modifiés, hydrocolloïdes, émulsifiants, agents blanchissants, plastifiants et agents anti-agglomérants, et dans laquelle la fibre alimentaire est une fibre de pomme de terre représentant de 0,5 à 15 % en poids.

2. Composition selon l'une quelconque de la revendication 1, dans laquelle la protéine végétale est un isolat de protéine de pois représentant de 2 à 15 % en poids.

3. Composition selon l'une quelconque des revendications 1 à 2, dans laquelle le lipide comprend de la stéarine de karité et/ou de l'huile de tournesol à haute teneur en acide oléique représentant de 5 à 30 % en poids.

4. Composition selon l'une quelconque des revendications 1 à 3, dans laquelle le calcium est du phosphate de calcium représentant de 0,5 à 5 % en poids.

5. Composition selon l'une quelconque des revendications 1 à 4, dans laquelle la fibre alimentaire comprend une fraction de polysaccharide soluble supérieure à 50 % en poids de la fibre alimentaire totale.

6. Composition selon la revendication 5, dans laquelle la fraction de polysaccharide soluble comprend au moins 50 % en poids de pectine.

7. Utilisation de la composition selon l'une quelconque des revendications 1 à 6 destinée à la préparation de recettes culinaires comprenant des desserts, fromages, garnitures salées.

8. Procédé de préparation de la composition d'analogue de fromage non laitier comprenant les étapes consistant à :
(i) Mélanger une fibre alimentaire, du calcium et une protéine végétale à température ambiante ;
(ii) Ajouter de l'eau sous cisaillement jusqu'à obtention d'un mélange homogène ;
(iii) Ajouter des lipides au mélange susmentionné et émulsifier sous fort cisaillement ;
(iv) Ajuster le pH de l'émulsion obtenue à l'étape (iii) entre 4 et 6, en faisant suivre par le chauffage de l'émulsion à une température allant de 70 °C à 90 °C, jusqu'à obtention d'une texture homogène lisse souhaitée.
(v) Mouler facultativement l'émulsion obtenue à l'étape (iv) à la forme souhaitée ; et
(vi) Refroidir jusqu'à obtenir une forme de gel.

9. Procédé selon la revendication 8, dans lequel l'étape (i) comprend en outre du sel aromatisé, de préférence du sel de table.

10. Procédé selon la revendication 8, dans lequel la composition, après l'étape de refroidissement, subit une étape d'évaporation d'eau effectuée sous vide.
